# FASCICULE DE BREVET EUROPEEN

(11) **EP 0 541 426 B1**
(45) Date de publication et mention de la délivrance du brevet: **12.06.1996**
(21) Numéro de dépôt: 92402949.9
(22) Date de dépôt: 30.10.1992
(51) Int. Cl.: C01B 33/20, C01B 33/22

(54) **Phyllosilicates 2:1 trioctaédriques non gonflants et leur procédé de préparation**
Nicht-quellbare trioktaedrische 2:1 Phyllosilikate und Verfahren zu ihrer Herstellung
Non-swelling trioctanedral 2:1 phyllosilicates and process for their preparation

(30) Priorité: 08.11.1991 FR 9113975
(43) Date de publication de la demande: 12.05.1993
(73) Titulaire: INSTITUT FRANCAIS DU PETROLE, F-92502 Rueil-Malmaison (FR)
(72) Inventeur: Joly, Jean-François, F-75003 Paris (FR); Huve, Laurent, F-68200 Mulhouse (FR); Lhommede, François, F-44190 Clisson (FR); Ledred, Ronan, F-68400 Riedisheim (FR); Saehr, Daniel, F-68400 Riedisheim (FR); Baron, Jacques, F-68100 Mulhouse (FR)

(56) Documents cités:
- EP-A- 0 088 372
- FR-A- 2 349 541
- CHEMICAL ABSTRACTS, vol. 108, no. 14, Avril 1988, Columbus, Ohio, US; abstract no. 115159z, TORII, K. AND IWASAKI, T. 'PREPARATION OF SWELLING SAPONITE-TYPE SMECTITE SILICATES' page 162; & JP-A-62 292 616 (AGENCY OF IND. SCIENCE AND TECHN.)
- CHEMICAL ABSTRACTS, vol. 110, no. 10, Mars 1989, Columbus, Ohio, US; abstract no. 78724, TORII, K. AND IWASAKI, T 'POROUS ARTICLES STRUCTURALLY SIMILAR TO THREE OCTAHEDRON-TYPE SMECTITE' page 189; & JP-A-63 185 811 (AGENCY OF IND. SCIENCE AND TECHN.)
- CHEMISTRY LETTERS (THE CHEMICAL SOCIETY OF 1,4 JAPAN) no. 12, 1986, TOKYO pages 2021 - 2024 TORII K. ET IWASAKI, T. 'SYNTHESIS OF NEW TRIOCTAHEDRAL MG-SMECTITE'
- PATENT ABSTRACTS OF JAPAN, vol. 15, no. 306 (C-856), 06 Août 1991 (AGENCY OF INDUSTRIAL SCIENCE AND TECHNOLOGY) 16 Mai 1991 & JP-A-3 115 113

## Description

Les phyllosilicates 2:1 trioctaédriques sont des minéraux qui résultent de l'empilement de feuillets élémentaires. Chaque feuillet comprend deux couches tétraédriques situées de part et d'autre d'une couche octaédrique. La couche tétraédrique est constituée de tétraèdres ΔO₄, 3 sommets sur 4 étant communs à 2 tétraèdres et un sommet étant libre, ΔO_{(3/2+1)}, Δ représentant une cavité tétraédrique et O un atome d'oxygène. La couche octaédrique est constituée d'octaèdres □0₆, les 6 sommets étant communs à 3 tétraèdres, □O_{6/3}, □ représentant une cavité octaédrique. En limitant le contenu du feuillet à une demi-maille, 4 tétraèdres Δ₄O₍₆₊₄₎ sont situés deux à deux de part et d'autre de 3 octaèdres □₃O₆ et ont en commun 4 sommets : Δ₄□₃O₍₁₂₎. Deux atomes O de la couche octaédrique ne participent pas à cette mise en commun et sont saturés par des atomes H : Δ₄□₃O₁₀(OH)₂. Le plus souvent les cavités tétraédriques Δ sont occupées par des atomes de silicium et les 3 cavités octaédriques □ sur 3 par des atomes de magnésium : Si₄Mg₃O₁₀(OH)₂. Cet édifice est électriquement neutre.

L'élément magnésium octaédrique peut être subsitué par des éléments divalents (par exemple Co, Ni, Zn), monovalent (par exemple Li) ou trivalents (par exemple Al, Ga).

L'existence de groupes -OH entraîne une instabilité thermique due à la réaction de déshydroxylation d'équation: 2 -OH → -O- + H₂O. A cet égard l'introduction, lors de la synthèse, de l'élément fluor dans la structure en place des groupes -OH conduit à des phyllosilicates de stabilité thermique nettement améliorée.

Les phyllosilicates possèdent une structure microporeuse liée à l'existence d'un espace interfoliaire. Seules les molécules ayant certaines formes et certaines dimensions sont capables d'entrer dans l'espace interfoliaire. L'insertion de piliers (composés minéraux permettant d'écarter les feuillets) dans l'espace interfoliaire lui confère une épaisseur plus importante. Les phyllosilicates à piliers sont des solides microporeux dont les propriétés rejoignent celles des zéolithes. Les phyllosilicates sont utilisés comme solides microporeux en adsorption et en catalyse.

La composition chimique des phyllosilicates, par la nature des éléments présents dans les cavités tétraédriques et octaédriques, est également un facteur important intervenant dans la sélectivité d'adsorption et surtout dans l'activité catalytique. Ceci s'explique d'une part par la nature et l'intensité des interactions entre leurs surfaces interne et externe et d'autre part les molécules adsorbées. Les phyllosilicates sont utilisés comme catalyseurs ou supports de catalyseurs dans le craquage, dans la modification d'hydrocarbures ainsi que dans l'élaboration de nombreuses molécules.

Des gisements de phyllosilicates trioctaédriques sont connus. Cependant, leurs applications industrielles sont limitées par leur qualité variable, leur composition et la présence d'impuretés constituant des charges indésirables dans certains procédés. Ces problèmes sont à l'origine d'importantes recherches en vue de synthétiser des phyllosilicates ayant les qualités requises et les propriétés souhaitées.

Trois grandes méthodes de préparation des phyllosilicates sont distinguées: la transformation des minéraux existants, la synthèse en milieu fondu (absence d'eau, haute température et forte pression) et la synthèse hydrothermale.

La troisième méthode est la plus intéressante. Elle permet d'obtenir des phyllosilicates bien cristallisés dans des conditions opératoires modérées, proches de celles utilisées dans le cas des zéolithes, pour des durées de synthèse raisonnables.

La plupart des synthèses hydrothermales de phyllosilicates sont effectuées en milieu basique, c'est-à-dire en présence d'ions OH⁻, à des pH supérieurs à 7. Comme rappelé précédemment, la substitution de l'élément F aux groupes OH dans la structure améliore la stabilité thermique. L'élément fluor F peut être introduit dans la structure directement lors de la synthèse, à condition que le milieu de synthèse dudit phyllosilicate contienne au moins une source de cet élément.

De nombreuses publications sont consacrées à la synthèse des phyllosilicates 2:1 trioctaédriques (Luptakova V. et Masar J., Acta F.R.N. Univ. Comen Chimia XXX, 81-88, 1982 ; Torii et Iwasaki T., Clay Sc, 6, 1-16, 1987 entre autres) dont certaines mettent en oeuvre des cations d'éléments de transition, tels que les éléments cobalt et nickel (Hazem M. et Wones D.R., Am. Miner., 57,103-129, 1972 ; Bruce L.A., Sauders J.V. et Turney T.W., Clays and Clay Min., 34, n°1, 25-36, 1986 ; Mizutani T. et al., Bull. Chem. Soc. Jap., 63, 2094-2098, 1990). Mais ce n'est que depuis une trentaine d'années que de telles synthèse, effectuées en présence de l'élément F, sont signalées (Granquist W.T. et Pollack S.S., 8th Nat. Conf. on Clays and Clay Min., Norman Oklahoma, 150-169, 1959 ; Barrer R.M. et Dicks L.W.R., J. Chem. Soc, A, 1523-1529, 1967).

Plus récemment, la synthèse hydrothermale de phyllosilicates en milieu fluoré a fait l'objet de développements nouveaux. Deux brevets japonais (Torii Kazuo, JP 62 292 615 et JP 62 292 616) revendiquent une gamme de produits de type smectite obtenus en présence d'acide silicique, de sels d'aluminium et de magnésium, d'ions alkylammonium, de sels de métaux alcalins et alcalino-terreux, et éventuellement de sels fluorés. Toutes les synthèses sont réalisées en milieu basique (pH supérieur à 7).

Un milieu de synthèse basique n'est pas favorable à la cristallisation de phyllosilicates riches en éléments silicium. Un tel milieu favorise l'incorporation d'éléments divers en couche tétraédrique. En outre l'utilisation d'un milieu de synthèse basique n'est pas favorable à l'obtention de phyllosilicates riches en élément fluor du fait de la concentration trop forte de ce milieu en ions OH⁻.

Selon l'art antérieur, la synthèse de phyllosilicates 2:1 trioctaédriques en présence d'ions F⁻ s'effectue soit en milieu basique, soit en milieu de pH minimal égal à 7 et à des températures variables : températures supérieures à 200°C pour des synthèses rapides, température ambiante pour des synthèses de plus longue durée.

Le document EP-A-0.088.372 décrit des hectorites, c'est-à-dire des produits gonflants, synthétiques, ainsi que leur synthèse en milieu conventionnel.

La présente invention a pour objet de nouveaux phyllosilicates 2:1 trioctaédriques non gonflants et leur procédé de préparation qui confère de plus aux phyllosilicates 2:1 trioctaédriques selon l'invention des propriétés améliorées, particulièrement des propriétés acides et de stabilité thermique.

L'originalité de la présente invention, comme on le verra plus loin, est l'obtention de nouveaux phyllosilicates 2:1 trioctaédriques en milieu fluoré et à pH inférieur à 7, en présence de l'acide HF, et/ou d'un autre acide et/ou d'autres sources d'anions F⁻ et à des températures inférieures à 250 °C.

Les phyllosilicates 2:1 trioctaédriques selon l'invention sont notamment caractérisés par :
a) la formule chimique générale approchée suivante (pour une demi-maille):

   [(Si₄)(D_{3-y}S_{y})O₁₀(OH_{2-z}F_{z})],nH₂O

   où D est un élément divalent choisi dans le groupe formé par les éléments Mg, Zn, Ni, Co, Mn, Fe et Cu.
   où S est un élément divalent choisi dans le groupe formé par les éléments Mg, Zn, Ni, Co, Mn, Fe et Cu.
   où y est un nombre compris entre 0 et 3,
   où z est un nombre non nul compris entre 0 et 2,
   où n est un nombre réel positif ou nul.
b) un diagramme de diffraction des rayons X caractérisé par la présence des raies suivantes:
   - une raie correspondant à une valeur de dₕₖₗ égale à 1,52 ∓ 0,01 10⁻¹⁰ m
   - quatre autres raies à des valeurs de dₕₖₗ égales à 4,57 ∓ 0,02 10⁻¹⁰ m, 2,63 ∓ 0,02 10⁻¹⁰ m, 2,52 ∓ 0,02 10⁻¹⁰ m et 2,28 ∓ 0,02 10⁻¹⁰ m.
   - au moins une réflexion 001 telle que d₀₀₁ soit égale à 9,7 ∓ 0,3 10⁻¹⁰ m.
c) une teneur en fluor telle que le rapport molaire F⁻/Si est compris entre 0,1 et 4, et de préférence entre 0,1 et 1.

Ils sont également caractérisés par un milieu de synthèse fluoré dans lequel est présent l'acide HF et/ou d'un autre acide, à un pH inférieur ou égal à 7 et de façon générale compris entre 0,5 et 6,5,. de manière préférée à un pH compris entre 0,5 et 6.

L'invention concerne également un procédé de préparation desdits phyllosilicates 2:1 trioctaédriques qui consiste en ce que :
a) on forme un mélange réactionnel en solution aqueuse ayant un pH inférieur à 7, comprenant notamment de l'eau, au moins une source de l'élément silicium, au moins une source d'un élément D divalent choisi dans le groupe formé par les éléments Mg, Zn, Ni, Co, Mn, Fe et Cu, au moins une source d'un élément S divalent choisi dans le groupe formé par les éléments Mg, Zn, Ni, Co, Mn, Fe et Cu, et au moins une source d'ions F⁻, au moins une source d'un acide, de préférence HF.
   Ledit mélange a une composition, en termes de rapport molaire, comprise dans les intervalles de valeurs suivants :
   D/Si: 0-50, de préférence 0-10,
   S/Si: 0-50, de préférence 0-10,
   F⁻ₜₒₜₐₗ: 0,1-10, de préférence 0,1-8,
   H₂O/Si: 5-100, de préférence 10-80,
   Acide/Si: 0,1-10, de préférence 0,1-8,
   HF/Si: 0-10, de préférence 0,1-8.
   F⁻ₜₒₜₐₗ représente la somme des ions F⁻, provenant éventuellement de l'acide HF dans le cas de l'utilisation de HF comme acide et éventuellement d'autres sources d'ions F⁻.
b) on maintient ledit mélange réactionnel à une température inférieure à 250°C, et de préférence inférieure à 230°C, jusqu'à ce que l'on obtienne un composé cristallin, et
c) ledit composé est calciné à une température supérieure à 200°C et, de préférence, supérieure à 450°C, par exemple sous un mélange d'air et d'azote.

La présence de l'élément F, apporté soit par l'acide HF soit au moyen d'autres sources au cours de l'étape de synthèse, dans les phyllosilicates 2:1 trioctaédriques selon l'invention confère auxdits phyllosilicates une propriété de stabilité thermique nettement améliorée par rapport aux phyllosilicates 2:1 trioctaédriques du même type préparés selon l'art antérieur.

On peut avantageusement chauffer le mélange réactionnel dans un autoclave revêtu intérieurement de polytétrafluoroéthylène à une température inférieure à 250°C, et de préférence inférieure à 230°C, pendant une durée qui peut varier de quelques heures à quelques jours selon la température de réaction, jusqu'à l'obtention d'un composé cristallisé que l'on sépare des eaux mères et qui est ensuite lavé à l'eau distillée puis séché.

De manière avantageuse, on peut préparer ledit mélange réactionnel à un pH compris entre 0,5 et 7, et de manière préférée entre 0,5 et 6,5, et de manière encore plus préférée entre 0,5 et 6.

Selon un mode préféré de la préparation de phyllosilicates 2:1 trioctaédriques selon l'invention, les rapports molaires des constituants du mélange réactionnel sont compris dans les intervalles de valeurs suivants:
D/Si: 0-3,
S/Si: 0-3,
F⁻ₜₒₜₐₗ: 0,1-6,
H₂O/Si: 10-70,
Acide/Si: 0,1-6,
HF/Si: 0-0,6.
F⁻ₜₒₜₐₗ représente la somme des ions F⁻, provenant de l'acide HF dans le cas de l'utilisation de HF comme acide et éventuellement d'autres sources d'ions F⁻ ajoutés à cet acide HF.

On peut avantageusement travailler en milieu agité, éventuellement en présence de germes constitués de cristaux de phyllosilicates 2:1 trioctaédriques.

Le pH du milieu réactionnel, inférieur à 7, peut être obtenu soit directement à partir de l'un ou plusieurs des réactifs mis en oeuvre, soit par l'ajout d'un acide, d'une base, d'un sel acide, d'un sel basique ou d'un mélange tampon complémentaire.

De nombreuses sources de l'élément silicium peuvent être utilisées, parmi lesquelles on peut citer à titre d'exemple les silices sous forme d'hydrogels, d'aérogels, de suspensions colloïdales, les silices résultant de la précipitation de solutions de silicates solubles ou de l'hydrolyse d'esters siliciques comme Si(OC₂H₅)₄ ou de complexes comme (NH₄)₂SiF₆.

Parmi les sources d'éléments divalents Zn, Ni, Co, Mn et Cu, on peut utiliser par exemple, des oxydes, des hydroxydes, des sels tels que les fluorures, chlorures, nitrates, sulfates, des sels d'acides organiques tel l'acétate.

Parmi les sources de l'élément magnésium, on peut utiliser, par exemple, l'oxyde MgO, l'hydroxyde Mg(OH)₂, les sels tels que les chlorures, nitrate et sulfate de magnésium, des sels d'acides organiques.

Parmi les sources de l'élément fer, on peut utiliser des oxydes, des hydroxy -oxydes, des hydroxydes, des sels.

Au lieu d'utiliser des sources séparées des divers éléments cités ci-dessus, on peut utiliser des sources dans lesquelles au moins deux éléments sont associés.

Les anions fluorure (F⁻) sont ajoutés sous forme éventuellement de l'acide HF et/ou éventuellement de sels et/ou de composés hydrolysables dans l'eau et pouvant libérer des ions F⁻.

La calcination, étape c) de la préparation décrite ci-avant, se déroule avantageusement à une température comprise entre 450 et 650°C sous gaz sec, comme par exemple l'air ou un gaz inerte.

L'identification des phyllosilicates 2:1 trioctaédriques selon l'invention peut se faire de manière aisée à partir de leur diagramme de diffraction des rayons X sur poudre non orientée préférentiellement. Ce diagramme de diffraction peut être obtenu à l'aide d'un diffractomètre en utilisant la méthode classique des poudres avec le rayonnement Kα du cuivre. Un étalon interne permet de déterminer précisemment les valeurs de 2θ associées aux pics de diffraction. Les distances interréticulaires dₕₖₗ sont calculées à partir de la relation de Bragg.

Les phyllosilicates 2:1 trioctaédriques selon la présente invention sont caractérisés par la présence dans leur spectre de diffraction des rayons X d'au moins les raies suivantes:
- une raie correspondant à une valeur de dₕₖₗ égale à 1,52 ∓ 0,01 10⁻¹⁰ m
- quatre autres raies à des valeurs de dₕₖₗ égales à 4,57 ∓ 0,02 10⁻¹⁰ m, 2,63 ∓ 0,02 10⁻¹⁰ m, 2,52 ∓ 0,02 10⁻¹⁰ m et 2,28 ∓ 0,02 10⁻¹⁰ m.
- au moins une réflexion 001 telle que d₀₀₁ soit égale à 9,7 ∓ 0,3 10⁻¹⁰ m.

Les exemples suivants illustrent l'invention sans toutefois en limiter la portée.

### Exemple 1:

A 45 ml d'eau distillée, on ajoute successivement et conformément aux indications fournies :
- 0,52 g de l'acide HF à 40% (Fluka),
- 6,58 g du sel (CH₃CO₂)₂Zn,4H₂0 (Prolabo) sous agitation vigoureuse, et
- 2,50 g de l'oxyde SiO₂ pulvérulent (Aerosil 130 de Degussa) sous agitation modérée.

La composition de l'hydrogel ainsi préparé, rapportée à une mole d'oxyde SiO₂ est:
1,0 SiO₂ ; 0,75 ZnO ; 0,25 HF ; 60 H₂O
soit en termes de rapport molaire :
Zn/Si = 0,75
F⁻/Si = 0,25
acide/Si = 0,25
H₂O/Si = 60
Cette composition ne tient pas compte de l'eau apportée par la source de zinc et par l'acide HF.

L'hydrogel ainsi obtenu est mûri 4 heures à la température ambiante (20°C) sous agitation modérée. Le pH est alors voisin de 5.

La cristallisation s'effectue ensuite dans un autoclave an acier, chemisé par un revêtement de téflon, d'une contenance de 120 ml, à 220°C, sous pression autogène durant 144 heures sans agitation. L'autoclave est ensuite refroidi à l'air ambiant.

Le produit est ensuite récupéré, filtré et lavé abondamment à l'eau distillée. Il est alors séché à 40-50°C durant 24 heures.

Au bout de ces 24 heures, le produit obtenu est caractérisé par son diagramme de diffraction des rayons X indiqué ci-après.

L'enregistrement est effectué à température et humidité ambiante.

| dₖₕₗ (Å) | I/Io |
|---|---|
| 9,7 | 100 |
| 4,57 | 13 |
| 3,18 | 18 |
| 2,63 | 8 |
| 2,52 | 10 |
| 2,286 | 1 |
| 1,725 | 3 |
| 1,526 | 15 |

Ce diffractogramme est caractéristique de celui des phyllosilicates 2:1 trioctaédriques selon l'invention.

La teneur pondérale en fluor du phyllosilicate obtenu est de 2%.

### Exemple 2:

A 45 ml d'eau distillée, on ajoute successivement et conformément aux indications fournies :
- 0,52 g de l'acide HF à 40% (Fluka),
- 8,88 g du sel (CH₃CO₂)₂Ni,4H₂0 (Merck) sous agitation vigoureuse, et
- 2,50 g de l'oxyde SiO₂ pulvérulent (Aerosil 130 de Degussa) sous agitation modérée.

La composition de l'hydrogel ainsi préparé, rapportée à une mole d'oxyde SiO₂ est:
1,0 SiO₂ ; 0,85 NiO ; 0,25 HF ; 60 H₂O
soit en termes de rapport molaire :
Ni/Si = 0,85
F⁻/Si = 0,25
acide/Si = 0,25
H₂O/Si = 60
Cette composition ne tient pas compte de l'eau apportée par la source de nickel et par l'acide HF.

L'hydrogel ainsi obtenu est mûri 4 heures à la température ambiante (20°C) sous agitation modérée. Le pH est alors voisin de 6,5.

La cristallisation s'effectue ensuite dans un autoclave en acier, chemisé par un revêtement de téflon, d'une contenance de 120 ml, à 220°C, sous pression autogène durant 144 heures sans agitation. L'autoclave est ensuite refroidi à l'air ambiant.

Le produit est ensuite récupéré, filtré et lavé abondamment à l'eau distillée. Il est alors séché à 40-50°C durant 24 heures.

Au bout de ces 24 heures, le produit obtenu est caractérisé par son diagramme de diffraction des rayons X indiqué ci-après.

L'enregistrement est effectué à température et humidité ambiante.

| dₖₕₗ (Å) | I/Io |
|---|---|
| 9,6 | 100 |
| 4,56 | 15 |
| 3,17 | 18 |
| 2,63 | 14 |
| 2,523 | 17 |
| 2,272 | 5 |
| 1,720 | 3 |
| 1,522 | 21 |

Ce diffractogramme est caractéristique de celui des phyllosilicates 2:1 trioctaédriques selon l'invention.

La teneur pondérale en fluor du phyllosilicate obtenu est de 4%.

### Exemple 3:

A 45 ml d'eau distillée, on ajoute successivement et conformément aux indications fournies :
- 0,52 g de l'acide HF à 40% (Fluka),
- 7,79 g du sel (CH₃CO₂)₂Co,4H₂0 (Prolabo) sous agitation vigoureuse, et
- 2,50 g de l'oxyde SiO₂ pulvérulent (Aerosil 130 de Degussa) sous agitation modérée.

La composition de l'hydrogel ainsi préparé, rapportée à une mole d'oxyde SiO₂ est:
1,0 SiO₂ ; 0,75 CoO ; 0,25 HF ; 60 H₂O
soit en termes de rapport molaire :
Co/Si = 0,75
F⁻/Si = 0,25
acide/Si = 0,25
H₂O/Si = 60
Cette composition ne tient pas compte de l'eau apportée par la source de cobalt et par l'acide HF.

L'hydrogel ainsi obtenu est mûri 4 heures à la température ambiante (20°C) sous agitation modérée. Le pH est alors voisin de 5.

La cristallisation s'effectue ensuite dans un autoclave en acier, chemisé par un revêtement de téflon, d'une contenance de 120 ml, à 220°C, sous pression autogène durant 144 heures sans agitation. L'autoclave est ensuite refroidi à l'air ambiant.

Le produit est ensuite récupéré, filtré et lavé abondamment à l'eau distillée. Il est alors séché à 40-50°C durant 24 heures.

Au bout de ces 24 heures, le produit obtenu est caractérisé par son diagramme de diffraction des rayons X indiqué ci-après.

L'enregistrement est effectué à température et humidité ambiante.

| dₖₕₗ (Å) | I/Io |
|---|---|
| 9,6 | 100 |
| 4,56 | 18 |
| 3,18 | 20 |
| 2,64 | 18 |
| 2,52 | 19 |
| 2,28 | 11 |
| 1,731 | 3 |
| 1,529 | 23 |

Ce diffractogramme est caractéristique de celui des phyllosilicates 2:1 trioctaédriques selon l'invention.

La teneur pondérale en fluor du phyllosilicate obtenu est de 4%.

### Exemple 4:

A 36 ml d'eau distillée, on ajoute successivement sous agitation et conformément aux indications fournies:
- 0,31 g de l'acide HF à 40% (Fluka),
- 6,84 g du sel (CH₃CO₂)₂Mg,4H₂O (Prolabo) sous agitation vigoureuse, et
- 2,50 g de l'oxyde SiO₂ pulvérulent (Aerosil 130 de Degussa) sous agitation modérée.

La composition de l'hydrogel ainsi préparé, rapportée à 1 mole de SiO₂ est :
1,0 SiO₂ ; 0,75 MgO ; 0,15 HF ; 36 H₂O
soit en termes de rapport molaire :
Mg/Si = 0,75
F⁻/Si = 0,15
acide/Si = 0,15
H₂O/Si = 36
Cette composition ne tient pas compte de l'eau apportée par la source de magnésium et par l'acide HF.

L'hydrogel ainsi obtenu est mûri 4 heures à la température ambiante (20°C) sous agitation modérée. Le pH est alors voisin de 4,5.

La cristallisation s'effectue ensuite dans un autoclave en acier, chemisé par un revêtement de téflon, d'une contenance de 120 ml, à 220°C, sous pression autogène durant 144 heures sans agitation. L'autoclave est ensuite refroidi à l'air ambiant.

Le produit est ensuite récupéré, filtré et lavé abondamment à l'eau distillée. Il est alors séché à 40-50°C durant 24 heures.

Au bout de ces 24 heures, le produit obtenu est calciné à 250°C sous air durant 24 heures puis caractérisé par son diagramme de diffraction des rayons X indiqué ci-après.

L'enregistrement est effectué à température et humidité ambiante.

| dₖₕₗ (Å) | I/Io |
|---|---|
| 9,7 | 100 |
| 4,79 | 16 |
| 4,55 | 90 |
| 3,18 | 49 |
| 2,61 | 30 |
| 2,51 | 25 |
| 2,28 | 5 |
| 1,724 | 20 |
| 1,519 | 60 |

Ce diffractogramme est caractéristique de celui des phyllosilicates 2:1 trioctaédriques selon l'invention.

La teneur pondérale en fluor du phyllosilicate obtenu est de 7%.

## Revendications

1. Phyllosilicates 2:1 trioctaédriques cristallisés non gonflants caractérisés par :
a) la formule chimique générale approchée suivante (pour une demi-maille):
[(Si₄)(D_{3-y}S_{y})O₁₀(OH_{2-z}F_{z})],nH₂O
où D est un élément divalent choisi dans le groupe formé par les éléments Mg, Zn, Ni, Co, Mn, Fe et Cu.
où S est un élément divalent choisi dans le groupe formé par les éléments Mg, Zn, Ni, Co, Mn, Fe et Cu.
où y est un nombre compris entre 0 et 3,
où z est un nombre non nul compris entre 0 et 2,
où n est un nombre réel positif ou nul.
b) un diagramme de diffraction des rayons X caractérisé par la présence des raies suivantes:
- une raie correspondant à une valeur de dₕₖₗ égale à 1,52 ∓ 0,01 10⁻¹⁰ m
- quatre autres raies à des valeurs de dₕₖₗ égales à 4,57 ∓ 0,02 10⁻¹⁰ m, 2,63 ∓ 0,02 10⁻¹⁰ m, 2,52 ∓ 0,02 10⁻¹⁰ m et 2,28 ∓ 0,02 10⁻¹⁰ m.
- au moins une réflexion 001 telle que d₀₀₁ soit égale à 9,7 ∓ 0,3 10⁻¹⁰ m.
c) une teneur en fluor telle que le rapport molaire F⁻/Si est compris entre 0,1 et 4,

2. Phyllosilicates 2:1 trioctaédriques cristallisés selon la revendication 1 synthétisés en milieu fluoré et acide.

3. Phyllosilicates 2:1 trioctaédriques cristallisés selon l'une des revendications 1 et 2 dont la teneur en fluor est telle que le rapport molaire F⁻/Si est compris entre 0,1 et 1.

4. Procédé de préparation de phyllosilicates 2:1 trioctaédriques selon l'une des revendications 1 à 3 caractérisé en ce que:
a) on forme un mélange réactionnel en solution aqueuse ayant un pH compris entre 0,5 et 6,5, comprenant notamment de l'eau, au moins une source de l'élément silicium, éventuellement au moins une source d'un élément D divalent choisi dans le groupe formé par les éléments Mg, Zn, Ni, Co, Mn, Fe et Cu au moins une source d'un élément S divalent choisi dans le groupe formé par les éléments Mg, Zn, Ni, Co, Mn, Fe et Cu et au moins une source d'ions F⁻, au moins une source d'un acide,
ledit mélange ayant une composition, en termes de rapport molaire, comprise dans les intervalles de valeurs suivants :
D/Si: 0-50,
S/Si: 0-50,
F⁻ₜₒₜₐₗ: 0,1-10,
H₂O/Si:5-100,
Acide/Si: 0,1-10,
HF/Si: 0-10,
F⁻ₜₒₜₐₗ représentant la somme des ions F⁻, provenant éventuellement de l'acide HF et éventuellement d'autres sources d'ions F⁻.
b) on maintient ledit mélange réactionnel à une température inférieure à 250°C, jusqu'à ce que l'on obtienne un composé cristallin, et
c) ledit composé est calciné à une température supérieure à 350°C.

5. Procédé selon la revendication 4 dans lequel, dans l'étape a), ledit mélange réactionnel a une composition, en termes de rapport molaire, comprise dans les intervalles de valeurs suivants:
D/Si: 0-10,
S/Si: 0-10,
F⁻ₜₒₜₐₗ: 0,1-8,
H₂O/Si: 10-80,
Acide/Si: 0,1-8,
HF/Si: 0,1-8.
F⁻ₜₒₜₐₗ représentant la somme des ions F⁻, provenant éventuellement de l'acide HF et éventuellement d'autres sources d'ions F⁻.

6. Procédé selon l'une des revendications 4 ou 5 dans lequel, dans l'étape a), ledit mélange réactionnel a une composition, en termes de rapport molaire, comprise dans les intervalles de valeurs suivants :
D/Si: 0-3,
S/Si: 0-3,
F⁻ₜₒₜₐₗ: 0,1-6,
H₂O/Si: 10-70,
Acide/Si: 0,1-6,
HF/Si: 0,1-6.
F⁻ₜₒₜₐₗ représentant la somme des ions F⁻, provenant éventuellement de l'acide HF et éventuellement d'autres sources d'ions F⁻.

7. Procédé selon l'une des revendications 4 ou 5, dans lequel, dans l'étape b), on maintient ledit mélange réactionnel à une température de chauffage inférieure à 230°C, jusqu'à ce que l'on obtienne un composé cristallin.

8. Procédé selon l'une des revendications 4 à 7 dans lequel, à l'étape c), ledit composé est calciné à une température supérieure à 450°C sous gaz sec.

## Claims

1. Non swelling crystallized trioctahedral 2:1 phyllosilicates characterized by:
a) the following approximate general chemical formula (for a half unit cell):
[(Si₄)(D_{3-y}S_{y})O₁₀(OH_{2-z}F_{z})], nH₂O
where
D is a divalent element selected from the group formed by the elements Mg, Zn, Ni, Co, Mn, Fe and Cu,
S is a divalent element selected from the group formed by the elements Mg, Zn, Ni, Co, Mn, Fe and Cu,
y is a number between 0 and 3,
z is a non zero number between 0 and 2,
n is a real number which is positive or zero,
b) an X ray diffraction diagram characterized by the presence of the following lines:
- a line corresponding to a dₕₖₗ value of 1.52 ± 0.01 x 10⁻¹⁰ m,
- four other lines corresponding to dₕₖₗ values of 4.57 ± 0.02 x 10⁻¹⁰ m, 2.63 ± 0.02 x 10⁻¹⁰ m, 2.52 ± 0.02 x 10⁻¹⁰ m and 2.28 ± 0.02 x 10⁻¹⁰ m,
- at least one 001 reflection in which d₀₀₁ is 9.7 ± 0.3 x 10⁻¹⁰ m;
c) a fluorine content such that the F⁻/Si molar ratio is in the range 0.1 to 4.

2. Crystallized trioctahedral 2:1 phyllosilicates according to claim 1 which have been synthesized in a fluorine-containing and acidic medium.

3. Crystallized trioctahedral 2:1 phyllosilicates according to claim 1 or claim 2 in which the fluorine content is such that the F⁻/Si molar ratio is in the range 0.1 to 1.

4. A process for the preparation of trioctahedral 2:1 phyllosilicates according to any one of claims 1 to 3, characterized in that:
a) a reaction mixture is formed in an aqueous solution with a pH in the range 0.5 to 6.5, in particular comprising water, at least one source of the element silicon, optionally at least one source of a divalent element D selected from the group formed by the elements Mg, Zn, Ni, Co, Mn, Fe and Cu, at least one source of a divalent element S, selected from the group formed by the elements Mg, Zn, Ni, Co, Mn, Fe and Cu, at least one source of ions F⁻, and at least one source of an acid,
said mixture having a composition, in terms of molar ratios, in the following ranges:
D/Si : 0-50,
S/Si : 0-50,
F⁻ₜₒₜₐₗ : 0.1-10,
H₂O/Si : 5-100,
Acid/Si : 0.1-10,
HF/Si : 0-10;
F⁻ₜₒₜₐₗ representing the sum of ions F⁻, possibly from the acid HF and possibly from other sources of F⁻;
b) said reaction mixture is held at a temperature of less than 250°C until a crystalline compound is obtained, and
c) said compound is calcined at a temperature of more than 350°C.

5. A process according to claim 4 in which, in step a), said reaction mixture has a composition, in terms of molar ratios, in the following ranges:
D/Si : 0-10,
S/Si : 0-10,
F⁻ₜₒₜₐₗ : 0.1-8,
H₂O/Si : 10-80,
Acid/Si : 0.1-8,
HF/Si : 0.1-8;
F⁻ₜₒₜₐₗ representing the sum of ions F⁻, possibly from the acid HF and possibly from other sources of F⁻.

6. A process according to claim 4 or claim 5 in which, in step a), said reaction mixture has a composition, in terms of molar ratios, in the following ranges:
D/Si : 0-3,
S/Si : 0-3,
F⁻ₜₒₜₐₗ : 0.1-6,
H₂O/Si : 10-70,
Acid/Si : 0.1-6,
HF/Si : 0.1-6;
F⁻ₜₒₜₐₗ representing the sum of ions F⁻, possibly from the acid HF and possibly from other sources of F⁻.

7. A process according to claim 4 or claim 5 in which, in step b), said reaction mixture is held at a heating temperature of less than 230°C until a crystalline compound is obtained.

8. A process according to any one of claims 4 to 7 in which, in step c), said compound is calcined at a temperature which is greater than 450°C in a dry gas.

## Patentansprüche

1. Kristallisierte, nicht-quellbare trioctaedrische 2:1 Phyllosilicate, gekennzeichnet durch:
a) die nachfolgende allgemeine chemische Überschlagsformel (für eine Halbzelle):
[(Si₄)(D_{3-y}S_{y})O₁₀(OH_{2-z}F_{z})],nH₂O
worin D ein zweiwertiges Element ist, das aus der durch die Elemente Mg, Zn, Ni, Co, Mn, Fe und Cu gebildeten Gruppe ausgewählt ist,
worin S ein zweiwertiges Element ist, das aus der durch die Elemente Mg, Zn, Ni, Co, Mn, Fe und Cu gebildeten Gruppe ausgewählt ist,
worin y eine Zahl zwischen einschließlich 0 und 3 ist.
worin z eine von 0 verschiedene Zahl zwischen 0 und 2 ist,
worin n eine positive reelle Zahl oder 0 ist,
b) ein Röntgenbeugungsdiagramm gekennzeichnet durch die Anwesenheit der folgenden Spektrallinien:
- eine Spektrallinie, entsprechend einem Wert von dₕₖₗ von gleich 1,52 ± 0,01 x 10⁻¹⁰ m,
- vier weitere Spektrallinien bei Werten von dₕₖₗ von gleich 4,57 ± 0,02 x 10⁻¹⁰ m, 2,63 ± 0,02 x 10⁻¹⁰ m, 2,52 ± 0,02 x 10⁻¹⁰ m und 2,28 ± 0,02 x 10⁻¹⁰ m,
- wenigstens eine Reflexion 001, so daß d₀₀₁ gleich 9,7 ± 0,3 x 10⁻¹⁰ m sei,
c) einen Gehalt an Fluor, so daß das molare Verhältnis F⁻/Si zwischen einschließlich 0,1 und 4 enthalten ist.

2. Kristallisierte, trioctaedrische 2:1 Phyllosilicate nach Anspruch 1, hergestellt in fluoriertem und saurem Milieu.

3. Kristallisierte, trioctaedrische 2:1 Phyllosilicate nach einem der Ansprüche 1 und 2, deren Gehalt an Fluor so ist, daß das molare Verhältnis F⁻/Si zwischen einschließlich 0,1 und 1 enthalten ist.

4. Verfahren zur Herstellung von trioctaedrischen 2:1 Phyllosilicaten nach einem der Ansprüche 1 bis 3, dadurch gekennzeichnet, daß:
a) man eine Reaktionsmischung in wäßriger Lösung mit einem pH-Wert, der zwischen einschließlich 0,5 und 6,5 enthalten ist, erzeugt, welche insbesondere Wasser, wenigstens eine Quelle des Elementes Silicium, gegebenenfalls wenigstens eine Quelle eines zweiwertigen Elementes D, ausgewählt aus der durch die Elemente Mg, Zn, Ni, Co, Mn, Fe und Cu gebildeten Gruppe, wenigstens eine Quelle eines zweiwertigen Elementes, ausgewählt aus der durch die Elemente Mg, Zn, Ni, Co, Mn, Fe und Cu gebildeten Gruppe und wenigstens eine F⁻-Ionenquelle, wenigstens eine Quelle einer Säure,
wobei die Mischung in Molverhältnis eine Zusammensetzung aufweist, die in den folgenden Werteintervallen enthalten ist,
D/Si: 0-50
S/Si: 0-50
F⁻ₜₒₜₐₗ: 0,1-10
H₂0/Si: 5-100
Säure/Si: 0,1-10
HF/Si: 0-10,
wobei F⁻ₜₒₜₐₗ die Summe von F⁻-Ionen darstellt, welche gegebenenfalls von der Säure HF und gegebenenfalls weiteren F⁻-Ionenquellen stammt,
b) man die Reaktionsmischung bei einer Temperatur unterhalb von 250°C hält, bis man eine kristalline Verbindung erhält, und
c) die Verbindung bei einer Temperatur von über 350°C kalziniert wird.

5. Verfahren nach Anspruch 4, worin im Schritt a) die Reaktionsmischung in Molverhältnis eine Zusammensetzung aufweist, welche in den folgenden Werteintervallen enthalten ist:
D/Si: 0-10
S/Si: 0-10
F⁻ₜₒₜₐₗ: 0,1-8
H₂0/Si: 10-80
Säure/Si: 0,1-8
HF/Si: 0,1-8,
wobei F⁻ₜₒₜₐₗ die Summe der F⁻-Ionen darstellt, welche gegebenenfalls von der Säure HF und gegebenenfalls weiteren F⁻-Ionenquellen stammt.

6. Verfahren nach einem der Ansprüche 4 oder 5, worin im Schritt a) die Reaktionsmischung in Molverhältnis eine Zusammensetzung aufweist, die in den folgenden Werteintervallen enthalten ist:
D/Si: 0-3
S/Si: 0-3
F⁻ₜₒₜₐₗ: 0,1-6
H₂0/Si: 10-70
Säure/Si: 0,1-6
HF/Si: 0,1-6,
wobei F⁻ₜₒₜₐₗ die Summe der F⁻-Ionen darstellt, welche gegebenenfalls aus der Säure HF und gegebenenfalls weiteren F⁻-Ionenquellen stammt.

7. Verfahren nach einem der Ansprüche 4 oder 5, worin im Schritt b) man die Reaktionsmischung bei einer Heiztemperatur unterhalb von 230°C hält, bis man eine kristalline Verbindung erhält.

8. Verfahren nach einem der Ansprüche 4 bis 7, worin im Schritt c) die Verbindung bei einer Temperatur unterhalb von 450°C unter trockenem Gas kalziniert wird.
